# EUROPEAN PATENT SPECIFICATION

(11) **EP 4 160 626 B1**
(45) Date of publication and mention of the grant of the patent: **28.01.2026**
(21) Application number: 21829813.1
(22) Date of filing: 23.03.2021
(51) Int. Cl.: H01B 11/22

(54) **PHOTOELECTRIC COMPOSITE CABLE AND COMMUNICATIONS SYSTEM**
PHOTOELEKTRISCHES VERBUNDKABEL UND KOMMUNIKATIONSSYSTEM
CÂBLE COMPOSITE PHOTOÉLECTRIQUE ET SYSTÈME DE COMMUNICATIONS

(30) Priority: 24.06.2020 CN 202010588796
(43) Date of publication of application: 05.04.2023
(73) Proprietor: Huawei Technologies Co., Ltd., Longgang District, Shenzhen, Guangdong 518129 (CN)
(72) Inventor: ZHANG, Jinxing, Shenzhen, Guangdong 518129 (CN); TANG, Feng, Shenzhen, Guangdong 518129 (CN); LIU, Shenghao, Shenzhen, Guangdong 518129 (CN)
(74) Representative: Thun, Clemens
(86) International application number: PCT/CN2021/082227
(87) International publication number: WO 2021/258793

(56) References cited:
- WO-A1-2020/075734
- WO-A2-2011/142642
- CN-A- 103 515 008
- CN-A- 103 515 008
- CN-A- 103 515 019
- CN-U- 207 425 455
- US-A1- 2005 199 415

## Description

### TECHNICAL FIELD

This application relates to the field of optical cables, and in particular, to a photoelectric composite cable and a communication system.

### BACKGROUND

With development of a 5th generation mobile network (5th Generation Mobile Networks, 5G) and a next generation fixed network, requirements for fiber to the access terminal such as fiber to the antenna, fiber to the camera, fiber to the traffic signal light, fiber to the room, and fiber to the ceiling are too numerous to enumerate. Fiber to the access stub terminal builds a foundation for high-speed and timely communication in the intelligent era, and satisfy demands for massive information and high-quality bandwidth in the intelligent era.

To connect to high-density stub terminals, both optical cables and electrical cables need to be laid, facing problems such as limited laying space and laying for a plurality of times. Therefore, a lightweight photoelectric composite cable with a small size is an example solution for fiber to the stub. In a process of laying a photoelectric composite cable, the photoelectric composite cable needs to pass through a pipe, but resistance when the photoelectric composite cable passes through the pipe is relatively large, affecting efficiency of laying the photoelectric composite cable.

CN 103 515 008 relates to a optoelectronic composite cable with temperature monitoring function. WO 2020/075734 relates to an optical fiber cable. US 2005/199415 relates to a communications cable that includes one or more core support-separators having various shaped profiles which define a clearance to maintain a spacing between transmission media or transmission media pairs.

### SUMMARY

The invention is defined by claim 1, preffered embodiments are subject matter of the dependent claims.

Embodiments of this application provide a photoelectric composite cable and a communication system. A convex structure is disposed on an outer wall of an outer jacket of the photoelectric composite cable, thereby reducing a friction area between the outer jacket and a pipe, reducing resistance when the photoelectric composite cable is laid in the pipe, and improving efficiency of laying the photoelectric composite cable.

### BRIEF DESCRIPTION OF DRAWINGS

FIG. 1 is a diagram of a network architecture to which this application is applied;
FIG. 2 is a schematic diagram of a first structure of a photoelectric composite cable according to an example not covered by the claims;
FIG. 3(a) is a schematic diagram of a first arrangement manner of a convex structure according to an example not covered by the claims;
FIG. 3(b) is a schematic view of a first cross section of an outer jacket in a length direction according to an example not covered by the claims;
FIG. 4(a) is a schematic diagram of a second arrangement manner of a convex structure according to an example not covered by the claims;
FIG. 4(b) is a schematic view of a second cross section of an outer jacket in a length direction according to an example not covered by the claims;
FIG. 5 is a schematic diagram of a structure of an optical unit which is used in an embodiment of this application;
FIG. 6 is a schematic diagram of a structure of an electrical unit whihe is used in an embodiment of this application;
FIG. 7 is a schematic diagram of a second structure of a photoelectric composite cable according to an example not covered by the claims;
FIG. 8 is a schematic diagram of a third structure of a photoelectric composite cable according to an example not covered by the claims;
FIG. 9 is a schematic diagram of a fourth structure of a photoelectric composite cable according to an example not covered by the claims;
FIG. 10 is a schematic diagram of a structure of a photoelectric composite cable according to a first embodiment of this application;
FIG. 11 is a schematic diagram of a structure of a photoelectric composite cable according to a second embodiment of this application;
FIG. 12 is a schematic diagram of a further structure of a photoelectric composite cable according to an example not covered by the claims; and
FIG. 13 is a schematic diagram of a structure of a communication system according to an embodiment of this application.

### DESCRIPTION OF EMBODIMENTS

Embodiments of this application provide a photoelectric composite cable and a communication system. A convex structure is disposed on an outer wall of an outer jacket of the photoelectric composite cable, thereby reducing a friction area between the outer jacket and a pipe, reducing resistance when the photoelectric composite cable is laid in the pipe, and improving efficiency of laying the photoelectric composite cable.

For ease of understanding, the following describes technical solutions in embodiments of the present invention with reference to the accompanying drawings in embodiments of the present invention. It is clear that the described embodiments are merely some but not all embodiments of the present invention. All other embodiments obtained by a person of ordinary skill in the art based on embodiments of the present invention without creative efforts shall fall within the protection scope of the present invention.

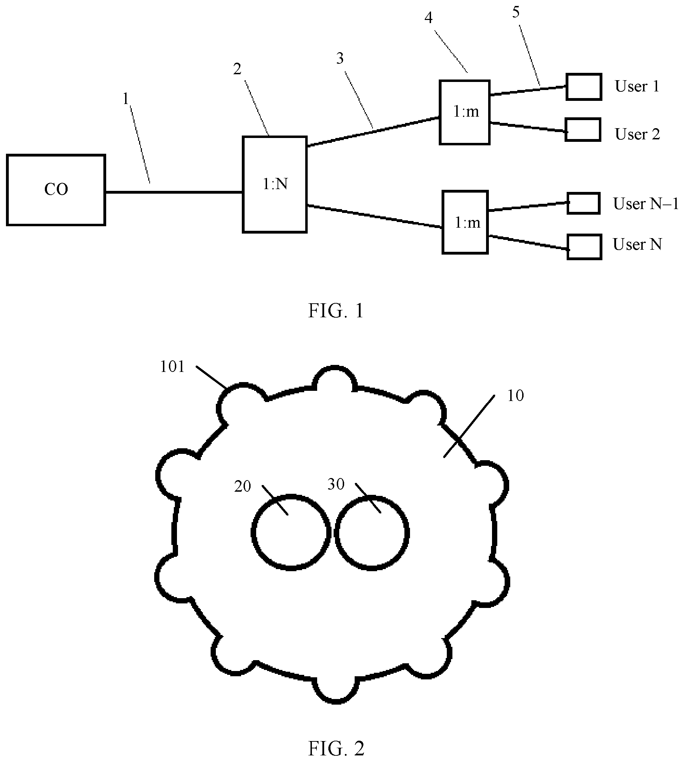

FIG. 1 is a diagram of a network architecture to which this application is applied. A flat drop cable provided in this application is mainly applied to an optical network of FTTx. FTTx may be FTTH (fiber to the home, fiber to the home), or may be FTTC (fiber to the curb, fiber to the curb), or may be FTTP (fiber to the premises, fiber to the premises), or may be FTTN (fiber to the node or neighborhood, fiber to the node or neighborhood), or may be FTTO (fiber to the office, fiber to the office), or FTTSA (fiber to the service area, fiber to the service area). An FTTH network is used as an example. From a perspective of downstream of a center office (centre office, CO), FTTH includes a feeder link 1, a 1:N splitter 2, a home pass 3, a 1:m splitter 4, and at least one branch link 5. In this application, a photoelectric composite cable is mainly applied to the foregoing branch link 5, that is, a home connect in a stub access scenario. Although this application uses a network of one type in FTTx structures as an example, another network structure is also applicable. The following describes in detail the photoelectric composite cable provided in this application.

FIG. 2 is a schematic diagram of a first structure of a photoelectric composite cable according to an example not covered by the claims. The photoelectric composite cable includes an outer jacket 10, an optical unit 20, and an electrical unit 30. The outer jacket 10 wraps outside the optical unit 20 and the electrical unit 30. The optical unit 20 and the electrical unit 30 are disposed closely adjacent to each other, and an extension direction of the optical unit 20 is consistent with an extension direction of the electrical unit 30. A convex structure 101 is further disposed on an outer wall of the outer jacket 10, and the convex structure 101 and the outer jacket 10 are integrally molded. A quantity of the convex structures 101 is not limited in this application. It should be understood that a cross section of the convex structure 101 may be a semicircle shown in FIG. 2, or may be another shape such as a rectangle, a triangle, or a trapezoid, which is not specifically limited herein.

It should be noted that a cross section of the outer jacket may be a circle, or may be an oval, which is not specifically limited herein.

In this example, an inner wall of the outer jacket 10 is in close contact with the optical unit 20 and the electrical unit 30, so that structures of the optical unit 20 and the electrical unit 30 are more stable. The optical unit 20 and the electrical unit 30 are disposed closely adjacent to each other, so that an overall structure of the photoelectric composite cable is more compact. This helps increase laying density of the photoelectric composite cable, and facilitates adaptation of the photoelectric composite cable to a compact connector. In addition, considering that the photoelectric composite cable often needs to pass through a pipe in a laying process, the convex structure 101 is disposed on the outer wall of the outer jacket 10, thereby reducing a friction area between the outer jacket 10 and the pipe, reducing resistance when the photoelectric composite cable is laid in the pipe, and improving efficiency of laying the photoelectric composite cable.

In this application, there may be a plurality of arrangement manners of the convex structure 101, which are separately described in the following.

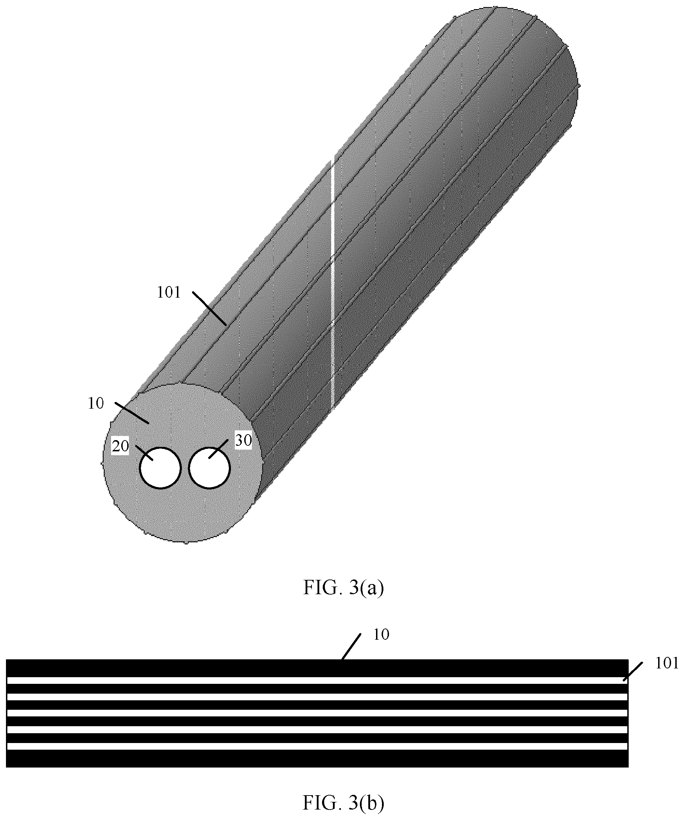

FIG. 3(a) is a schematic diagram of a first arrangement manner of a convex structure according to another example not covered by the claims. A plurality of convex structures 101 are disposed side by side on the outer wall of the outer jacket 10. It should be understood that the convex structures 101 may be straight strip structures parallel to each other, as shown in FIG. 3(a). In addition, the convex structures 101 may be alternatively other forms of structures. For example, the convex structures 101 may be wavy strip structures parallel to each other. This is not specifically limited herein. FIG. 3(b) is a schematic view of a first cross section of an outer jacket in a length direction according to another example not covered by the claims. It can be seen that the convex structures 101 are parallel to each other and are disposed in an extension direction of the photoelectric composite cable.

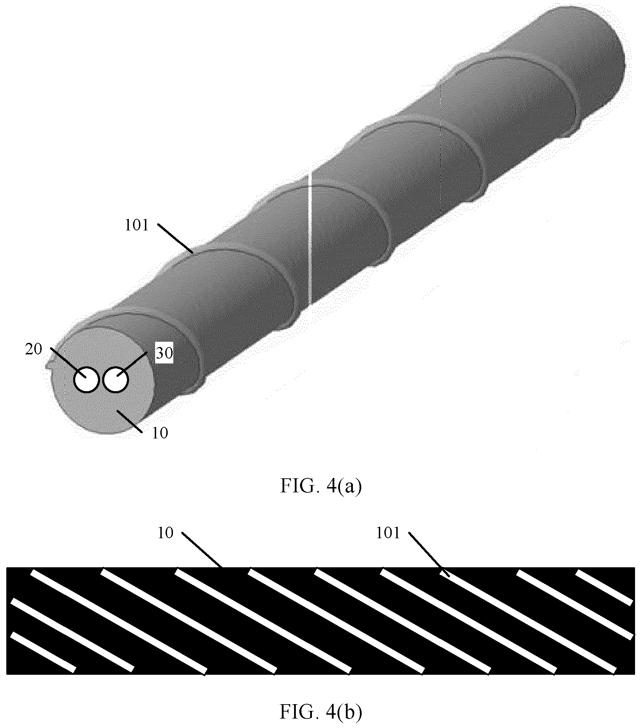

FIG. 4(a) is a schematic diagram of a second arrangement manner of a convex structure according to an example not covered by the claims. A plurality of convex structures 101 are disposed side by side on the outer wall of the outer jacket 10, and the convex structures 101 are helically wrapped around the outer wall of the outer jacket 10.

FIG. 4(b) is a schematic view of a second cross section of an outer jacket in a length direction according to another example not covered by the claims. It can be seen that, different from the convex structure 101 shown in FIG. 3(b), an extension direction of each convex structure 101 shown in FIG. 4(b) has a specific inclination angle with the extension direction of the photoelectric composite cable.

It should be understood that this application is not limited to the two arrangement manners of the convex structures listed above, any manner in which convex structures are distributed on the outer wall of the photoelectric composite cable falls within the protection scope of this application.

It should be noted that, during construction, the photoelectric composite cable is inevitably curled, twisted, or unevenly stressed. In this case, a part of the photoelectric composite cable that is most stressed is a central position of the photoelectric composite cable. The central position is exactly provided with an optical fiber and a wire, and protection for the optical fiber and the wire is relatively weak. Therefore, protection for the optical fiber and the wire is improved by using the design manner in which the photoelectric composite cable provided in this application uses an optical unit and an electrical unit. The following provides further description.

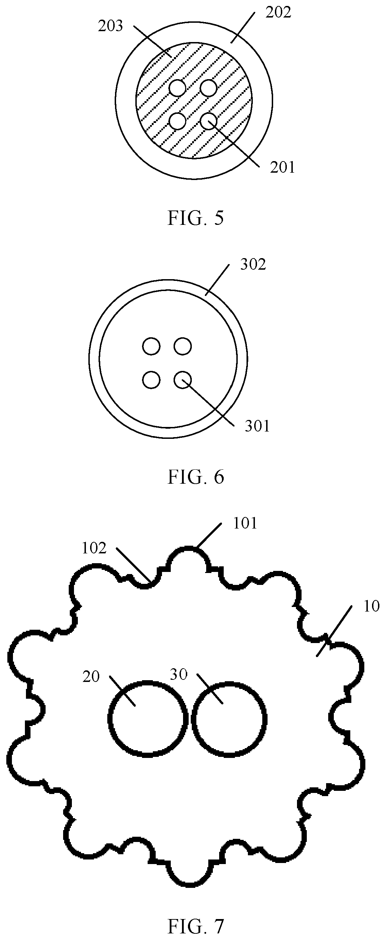

FIG. 5 is a schematic diagram of a structure of an optical unit which is used in an embodiment of this application. The optical unit 20 includes an optical fiber 201 and a ferrule 202. The ferrule 202 is sleeved on the optical fiber 201 to protect the optical fiber 201. Specifically, there may be one or more optical fibers 201. Optionally, a water blocking layer 203 may be further disposed between the optical fiber 201 and the ferrule 202, and the water blocking layer 203 has a waterproof effect and may buffer an external force applied to the optical unit 20. A material of the water blocking layer 203 may be ointment or cured resin. A material of the ferrule 202 may be polybutylene terephthalate (polybutylene terephthalate, PBT), a polyester cured material, or stainless steel. A high temperature resistance range of the ferrule 202 is 80°C to 200°C.

FIG. 6 is a schematic diagram of a structure of an electrical unit which is also used in an embodiment of this application. The electrical unit 30 includes a wire 301 and a wire jacket 302. The wire jacket 302 is sleeved on the wire 301 to protect the wire 301. Specifically, there may be one or more wires 301.

It should be noted that, because the optical unit 20 and the electrical unit 30 are disposed closely adjacent to each other, if hardness of the ferrule 202 and hardness of the wire jacket 302 differ greatly, in a process of laying the photoelectric composite cable, extrusion may occur between the optical unit 20 and the electrical unit 30 due to uneven force, affecting stability of the optical unit 20 or the electrical unit 30. Therefore, in this application, both the ferrule 202 and the wire jacket 302 are of flexible structures. In this case, when the photoelectric composite cable is laid in a pipe, a traction tool needs to be used. Alternatively, both the ferrule 202 and the wire jacket 302 are of rigid structures, and rigidity of the two is similar. Overall rigidity of the photoelectric composite cable is higher, and the photoelectric composite cable can be smoothly pushed in a pipe without a traction tool.

Optionally, to further reduce resistance when the photoelectric composite cable is laid in the pipe, the outer jacket 10 may use a material with high hardness and a low friction coefficient. For example, a friction coefficient of the outer jacket 10 may be less than or equal to 0.5, and hardness of the outer jacket 10 is greater than or equal to 70 Shore A.

In some possible implementations, to further reduce an overall size of the photoelectric composite cable, the outer jacket 10 may be further improved to some extent. The following provides detailed description.

FIG. 7 is a schematic diagram of a second structure of a photoelectric composite cable according to an example not covered by the claims. A plurality of convex structures 101 are disposed side by side on the outer wall of the outer jacket 10. When the photoelectric composite cable is laid in the pipe, the convex structure 101 comes into contact with the pipe. Therefore, a groove 102 may be further provided between every two adjacent convex structures 101 on the outer wall of the outer jacket 10. In this way, a cross-sectional area of the outer jacket 10 is reduced, better helping improve laying density of the photoelectric composite cable. It should be understood that, although a groove 102 may be provided on the outer wall of the outer jacket, a depth of the groove 102 needs to be controlled, so that a specific safe distance between a bottom of the groove 102 and the optical unit 20 and the electrical unit 30 is maintained, to form good protection for the optical unit 20 and the electrical unit 30. Optionally, a cross section of the groove 102 may be a semicircle shown in FIG. 7, or may be another shape such as a rectangle, a triangle, or a trapezoid, which is not specifically limited herein.

It should be noted that there may be one or more optical units 20, and one or more electrical units. The following provides several typical arrangement manners of the optical unit 20 and the electrical unit 30.

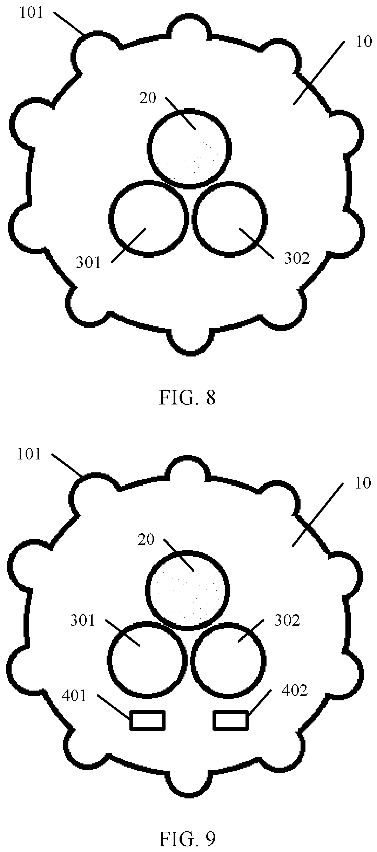

FIG. 8 is a schematic diagram of a third structure of a photoelectric composite cable according to another example not covered by the claims. The photoelectric composite cable includes one optical unit 20 and two electrical units (a first electrical unit 301 and a second electrical unit 302). The optical unit 20, the first electrical unit 301, and the second electrical unit 302 are disposed closely adjacent to each other. The optical unit 20, the first electrical unit 301, and the second electrical unit 302 are distributed around a center of the outer jacket 10; in other words, distances of the optical unit 20, the first electrical unit 301, and the second electrical unit 302 from the center of the outer jacket 10 are similar, helping improve overall compactness of the photoelectric composite cable. Correspondingly, distances of the optical unit 20, the first electrical unit 301, and the second electrical unit 302 from the outer wall of the outer jacket 10 are similar, helping the outer jacket form good protection for the optical unit 20, the first electrical unit 301, and the second electrical unit 302.

In a possible implementation, electrical polarities of the first electrical unit 301 and the second electrical unit 302 are different. For example, an electrical polarity of the first electrical unit 301 is positive, and an electrical polarity of the second electrical unit 302 is negative. To help a user distinguish between the electrical polarities of the two electrical units, an electrode identification structure may be further disposed in the outer jacket 10. The electrode identification structure may be implemented in a plurality of manners. For example, FIG. 9 is a schematic diagram of a fourth structure of a photoelectric composite cable according to an example not covered by the claims. The electrode identification structure includes a positive electrode color strip 401 and a negative electrode color strip 402 that have different colors. The positive electrode color strip 401 and the negative electrode color strip 402 are wrapped by the outer jacket. The positive electrode color strip 401 is disposed near the first electrical unit 301, and an extension direction of the positive electrode color strip 401 is consistent with an extension direction of the first electrical unit 301. The negative electrode color strip 402 is disposed near the second electrical unit 302, and an extension direction of the negative electrode color strip 402 is consistent with an extension direction of the second electrical unit 302. Alternatively, the electrode identification structure includes slotted structures with different cross-sectional shapes. For example, a cross section of a slotted structure near the first electrical unit 301 is rectangular, and a cross section of a slotted structure near the second electrical unit 302 is circular. It should be understood that, in addition to the electrode identification structures listed above, any other structure that is used to distinguish an electrode of an electrical unit falls within the protection scope of this application, and is not listed one by one herein. The electrode identification structure is also disposed inside the outer jacket 10, helping form good protection for the electrode identification structure.

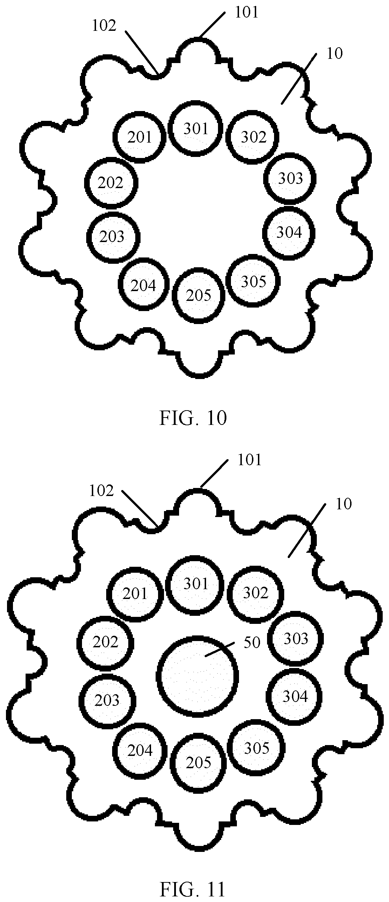

FIG. 10 is a schematic diagram of a structure of a photoelectric composite cable according to a first embodiment of this application. There are a plurality of optical units 20 and a plurality of electrical units 30. For example, as shown in FIG. 10, the optical units 20 include an optical unit 201, an optical unit 202, an optical unit 203, an optical unit 204, and an optical unit 205. The electrical units 30 include an electrical unit 301, an electrical unit 302, an electrical unit 303, an electrical unit 304, and an electrical unit 305. The optical units and the electrical units are sequentially disposed closely adjacent to each other, and the optical units and the electrical units are distributed around a center of the outer jacket 10, helping improve overall compactness of the photoelectric composite cable.

According to the invention, a total quantity of optical units 20 and electrical units 30 is the same as and is in a one-to-one correspondence with a total quantity of convex structures 101. To be specific, each optical unit 20 is disposed collinearly with a convex structure 101 corresponding to the optical unit 20 and the center of the outer jacket 10, and each electrical unit 30 is disposed collinearly with a convex structure 101 corresponding to the electrical unit 30 and the center of the outer jacket 10. Correspondingly, a position at which every two adjacent optical units 20 or electrical units 30 are close to each other corresponds to a groove 102 on the outer jacket 10. It may be understood that a concave may be formed at the position at which every two adjacent optical units 20 or electrical units 30 are close to each other. That the concave position is provided corresponding to the groove 102 clearly has a better wrapping effect than that the optical unit 20 or the electrical unit 30 is disposed corresponding to the groove 102. In this design manner, on a basis of improving compactness of the photoelectric composite cable, the optical unit 20 and the electrical unit 30 may be further well protected. It should be noted that the foregoing arrangement manner of the optical units and the electrical units is that optical units 201 to 205 are sequentially arranged and electrical units 301 to 305 are sequentially arranged, as shown in FIG. 9. In addition, another arrangement manner may be used. For example, the optical units and the electrical units are staggered with each other.

FIG. 11 is a schematic diagram of another structure of a photoelectric composite cable according to a second embodiment of this application. Based on the structure shown in FIG. 10, the photoelectric composite cable may further include a reinforcement 50. The reinforcement 50 is wrapped by the outer jacket 10, and an extension direction of the reinforcement 50 is consistent with extension directions of the optical unit 20 and the electrical unit 30. Preferably, the reinforcement 50 is disposed in a center of the outer jacket 10, and optical units and electrical units are disposed around the reinforcement 50. By disposing the reinforcement 50, tensile performance of the photoelectric composite cable is improved. Optionally, in some possible implementations, the foregoing reinforcement 50 may be alternatively replaced with the optical unit 20 or the electrical unit 30, so that a similar effect may also be achieved.

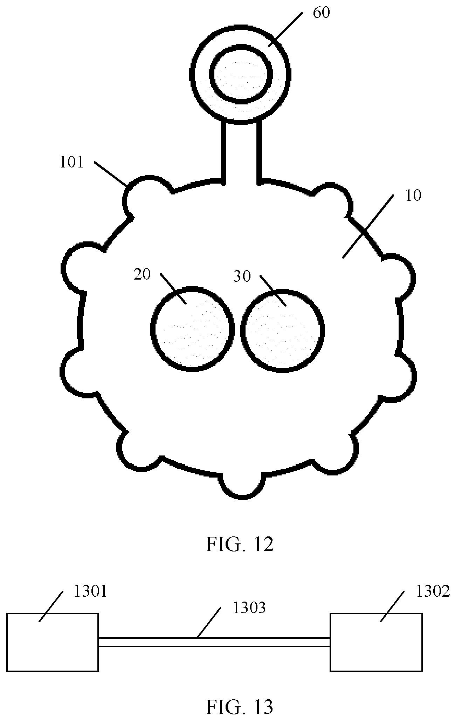

FIG. 12 is a schematic diagram of a seventh structure of a photoelectric composite cable according to an example not covered by the claims. In some possible implementations, the photoelectric composite cable needs to be laid in a mounting groove, suspended on a ceiling, or the like. To facilitate suspension of the photoelectric composite cable, the photoelectric composite cable may further include a suspension wire 60. The suspension wire 60 and the outer jacket 10 are integrally molded, and the suspension wire 60 is configured to hang the outer jacket 10. By disposing the suspension wire 60, the photoelectric composite cable is more easily installed in an actual application scenario. In addition, strength of the photoelectric composite cable is improved because the suspension wire 60 and the outer jacket 10 are integrally molded. Optionally, the suspension wire 60 may alternatively use any one or any combination of a single steel wire, a stranded steel wire, an aramid yarn, a glass yarn, a glass yarn reinforcement rod, an aramid yarn reinforcement rod, or the like to improve tensile performance of the suspension wire 60.

The foregoing describes the photoelectric composite cable provided in this application, and the following describes a communication system provided in this application. FIG. 13 is a schematic diagram of a structure of a communication system according to an embodiment of this application. The communication system includes a first communication device 1301 and a second communication device 1302. The first communication device 1301 and the second communication device 1302 are connected through a photoelectric composite cable 1303. The photoelectric composite cable 1303 may be specifically the photoelectric composite cable described in any one of the foregoing embodiments in FIG. 10 and 11. An optical signal and an electrical signal that are output by the first communication device 1301 may be transmitted to the second communication device 1302 through the photoelectric composite cable 1303. Similarly, an optical signal and an electrical signal that are output by the second communication device 1302 may also be transmitted to the first communication device 1301 through the photoelectric composite cable 1303.

It should be noted and understood that there can be improvements and modifications made to the present invention described in detail below without departing from the scope of the invention as set forth in the accompanying claims.

## Claims

1. A photoelectric composite cable, comprising a plurality of optical units (20, 201, 202, 203, 204, 205), a plurality of electrical units (30, 301, 302, 303, 304, 305), and an outer jacket (10),
wherein the optical units (20, 201, 202, 203, 204, 205) and the electrical units (30, 301, 302, 303, 304, 305) are sequentially disposed closely adjacent to each other and around the center of the outer jacket (10),
each optical unit (20) comprises an optical fiber (201) and a ferrule (202), and the ferrule (202) is sleeved on the optical fiber (201);
each electrical unit (30) comprises a wire (301) and a wire jacket (302), and the wire jacket (302) is sleeved on the wire (301);
the outer jacket (10) wraps outside the optical units (20, 201, 202, 203, 204, 205) and the electrical units (30, 301, 302, 303, 304, 305) and an extension direction of the optical units (20, 201, 202, 203, 204, 205) is consistent with an extension direction of the electrical units (30, 301, 302, 303, 304, 305);
a plurality of convex structures (101) is disposed on an outer wall of the outer jacket (10),
the convex structures (101) are disposed side by side on the outer wall of the outer jacket (10), and a groove (102) is provided between every two adjacent convex structures (101) on the outer wall of the outer jacket (10),
a total quantity of the optical units (20, 201, 202, 203, 204, 205) and the electrical units (30, 301, 302, 303, 304, 305) is a same as a total quantity of the convex structures (101); and a position at which every two adjacent optical units (20, 201, 202, 203, 204, 205) or electrical units (30, 301, 302, 303, 304, 305) are close to each other corresponds to the respective groove (102) on the outer jacket (10).

2. The photoelectric composite cable according to claim 1, wherein the convex structures (101) are disposed along the extension directions of the optical units (20) and the electrical units (30).

3. The photoelectric composite cable according to claim 1, wherein the convex structures (101) are helically wrapped around the outer wall of the outer jacket (10).

4. The photoelectric composite cable according to any one of claims 1 to 3, wherein the ferrule (202) and the wire jacket (302) are of rigid structures, and rigidity of the ferrule (202) and the wire jacket (302) match each other; or the ferrule (202) and the wire jacket (302) are of flexible structures.

5. The photoelectric composite cable according to any one of claims 1 to 4, wherein there are a plurality of optical fibers (201) in each of the optical units (20), and there are a plurality of wires (301) in each of the electrical units (30).

6. The photoelectric composite cable according to any one of claims 1 to 5, wherein a water blocking layer (203) is disposed between the ferrule (202) and the optical fiber (201), and a material of the water blocking layer (203) is ointment or cured resin.

7. The photoelectric composite cable according to any one of claims 1 to 6, wherein a high temperature resistance range of the ferrule is 80°C to 200°C.

8. The photoelectric composite cable according to any one of claims 1 to 7, wherein a friction coefficient of the outer jacket (10) is less than or equal to 0.5, and hardness of the outer jacket (10) is greater than or equal to 70 Shore A.

9. The photoelectric composite cable according to any one of claims 1 to 8, each optical unit (20, 201, 202, 203, 204, 205) and each electrical unit (30, 301, 302, 303, 304, 305) is in close contact with an inner wall of the outer jacket (10).

10. A communication system, comprising a first communication device (1301) and a second communication device (1302), wherein the first communication device (1301) and the second communication device (1302) are connected through a photoelectric composite cable (1303), and the photoelectric composite cable (1303) is the photoelectric composite cable (1303) according to any one of claims 1 to 9;
the first communication device (1301) is configured to output an optical signal and an electrical signal; and
the second communication device (1302) is configured to receive the optical signal and the electrical signal.

## Patentansprüche

1. Photoelektrisches Verbundkabel, das eine Vielzahl optischer Einheiten (20, 201, 202, 203, 204, 205), eine Vielzahl elektrischer Einheiten (30, 301, 302, 303, 304, 305) und einen Außenmantel (10) umfasst,
wobei die optischen Einheiten (20, 201, 202, 203, 204, 205) und die elektrischen Einheiten (30, 301, 302, 303, 304, 305) sequenziell eng benachbart zueinander und um die Mitte des Außenmantels (10) herum positioniert sind,
jede optische Einheit (20) eine optische Faser (201) und eine Ferrule (202) umfasst und die Ferrule (202) auf die optische Faser (201) aufgeschoben ist;
jede elektrische Einheit (30) einen Draht (301) und eine Drahtarmierung (302) umfasst und die Drahtarmierung (302) auf den Draht (301) aufgeschoben ist;
der Außenmantel (10) die optischen Einheiten (20, 201, 202, 203, 204, 205) und die elektrischen Einheiten (30, 301, 302, 303, 304, 305) umschließt und eine Erstreckungsrichtung der optischen Einheiten (20, 201 , 202, 203, 204, 205) mit einer Erstreckungsrichtung der elektrischen Einheiten (30, 301, 302, 303, 304, 305) übereinstimmt;
eine Vielzahl konvexer Strukturen (101) auf einer Außenwand des Außenmantels (10) positioniert ist,
die konvexen Strukturen (101) auf der Außenwand des Außenmantels (10) nebeneinander positioniert sind und eine Rille (102) zwischen je zwei benachbarten konvexen Strukturen (101) auf der Außenwand des Außenmantels (10) vorgesehen ist, eine Gesamtmenge der optischen Einheiten (20, 201, 202, 203, 204, 205) und der elektrischen Einheiten (30, 301, 302, 303, 304, 305) gleich einer Gesamtmenge der konvexen Strukturen (101) ist; und eine Position, an der je zwei benachbarte optische Einheiten (20, 201, 202, 203, 204, 205) oder elektrische Einheiten (30, 301, 302, 303, 304, 305) nah beieinander sind, mit der jeweiligen Rille (102) auf dem Außenmantel (10) korrespondiert.

2. Photoelektrisches Verbundkabel nach Anspruch 1, wobei die konvexen Strukturen (101) entlang der Erstreckungsrichtungen der optischen Einheiten (20) und der elektrischen Einheiten (30) positioniert sind.

3. Photoelektrisches Verbundkabel nach Anspruch 1, wobei die konvexen Strukturen (101) spiralförmig um die Außenwand des Außenmantels (10) herum gewickelt sind.

4. Photoelektrisches Verbundkabel nach einem der Ansprüche 1 bis 3, wobei die Ferrule (202) und die Drahtarmierung (302) aus steifen Strukturen sind und die Steifigkeit der Ferrule (202) und der Drahtarmierung (302) einander entsprechen; oder die Ferrule (202) und die Drahtarmierung (302) aus biegsamen Strukturen sind.

5. Photoelektrisches Verbundkabel nach einem der Ansprüche 1 bis 4, wobei in jeder der optischen Einheiten (20) eine Vielzahl optischer Fasern (201) ist und in jeder der elektrischen Einheiten (30) eine Vielzahl von Drähten (301) ist.

6. Photoelektrisches Verbundkabel nach einem der Ansprüche 1 bis 5, wobei zwischen der Ferrule (202) und der optischen Faser (201) eine wasserblockierende Schicht (203) positioniert ist und ein Material der wasserblockierenden Schicht (203) ein Gel oder ausgehärtetes Harz ist.

7. Photoelektrisches Verbundkabel nach einem der Ansprüche 1 bis 6, wobei ein Hochtemperaturbeständigkeitsbereich der Ferrule 80°C bis 200°C beträgt.

8. Photoelektrisches Verbundkabel nach einem der Ansprüche 1 bis 7, wobei eine Reibungskennzahl des Außenmantels (10) kleiner als oder gleich 0,5 ist und die Härte des Außenmantels (10) größer als oder gleich 70 Shore A ist.

9. Photoelektrisches Verbundkabel nach einem der Ansprüche 1 bis 8, wobei jede optische Einheit (20, 201, 202, 203, 204, 205) und jede elektrische Einheit (30, 301, 302, 303, 304, 305) in engem Kontakt mit einer Innenwand des Außenmantels (10) stehen.

10. Kommunikationssystem, das eine erste Kommunikationseinrichtung (1301) und eine zweite Kommunikationseinrichtung (1302) umfasst, wobei die erste Kommunikationseinrichtung (1301) und die zweite Kommunikationseinrichtung (1302) durch ein photoelektrisches Verbundkabel (1303) verbunden sind und das photoelektrische Verbundkabel (1303) das photoelektrische Verbundkabel (1303) nach einem der Ansprüche 1 bis 9 ist;
die erste Kommunikationseinrichtung (1301) konfiguriert ist, um ein optisches Signal und ein elektrisches Signal auszugeben; und
die zweite Kommunikationseinrichtung (1302) konfiguriert ist, um das optische Signal und das elektrische Signal zu empfangen.

## Revendications

1. Câble composite photoélectrique, comportant une pluralité d'unités optiques (20, 201, 202, 203, 204, 205), une pluralité d'unités électriques (30, 301, 302, 303, 304, 305), et une gaine extérieure (10),
les unités optiques (20, 201, 202, 203, 204, 205) et les unités électriques (30, 301, 302, 303, 304, 305) étant disposées séquentiellement de façon adjacente et rapprochée les unes par rapport aux autres et autour du centre de la gaine extérieure (10),
chaque unité optique (20) comportant une fibre optique (201) et une ferrule (202), et la ferrule (202) étant enfilée sur la fibre optique (201) ;
chaque unité électrique (30) comportant un fil (301) et une gaine (302) de fil, et la gaine (302) de fil étant enfilée sur le fil (301) ;
la gaine extérieure (10) enveloppant extérieurement les unités optiques (20, 201, 202, 203, 204, 205) et les unités électriques (30, 301, 302, 303, 304, 305) et une direction d'extension des unités optiques (20, 201, 202, 203, 204, 205) concordant avec une direction d'extension des unités électriques (30, 301, 302, 303, 304, 305) ;
une pluralité de structures convexes (101) étant disposée sur une paroi extérieure de la gaine extérieure (10),
les structures convexes (101) étant disposées côte à côte sur la paroi extérieure de la gaine extérieure (10), et une rainure (102) étant aménagée entre chaque paire de structures convexes (101) adjacentes sur la paroi extérieure de la gaine extérieure (10), une quantité totale des unités optiques (20, 201, 202, 203, 204, 205) et des unités électriques (30, 301, 302, 303, 304, 305) étant la même qu'une quantité totale des structures convexes (101) ; et une position au niveau de laquelle chaque paire d'unités optiques (20, 201, 202, 203, 204, 205) ou d'unités électriques (30, 301, 302, 303, 304, 305) adjacentes sont proches l'une de l'autre correspondant à la rainure (102) respective sur la gaine extérieure (10).

2. Câble composite photoélectrique selon la revendication 1, les structures convexes (101) étant disposées suivant les directions d'extension des unités optiques (20) et des unités électriques (30).

3. Câble composite photoélectrique selon la revendication 1, les structures convexes (101) étant enroulées en hélice autour de la paroi extérieure de la gaine extérieure (10).

4. Câble composite photoélectrique selon l'une quelconque des revendications 1 à 3, la ferrule (202) et la gaine (302) de fil étant de structures rigides, et la rigidité de la ferrule (202) et celle de la gaine (302) de fil s'accordant entre elles, ou la ferrule (202) et la gaine (302) de fil étant de structures souples.

5. Câble composite photoélectrique selon l'une quelconque des revendications 1 à 4, une pluralité de fibres optiques (201) étant présente dans chacune des unités optiques (20), et une pluralité de fils (301) étant présente dans chacune des unités électriques (30).

6. Câble composite photoélectrique selon l'une quelconque des revendications 1 à 5, une couche (203) arrêtant l'eau étant disposée entre la ferrule (202) et la fibre optique (201), et un matériau de la couche (203) arrêtant l'eau étant un onguent ou une résine durcie.

7. Câble composite photoélectrique selon l'une quelconque des revendications 1 à 6, une plage de résistance aux hautes températures de la ferrule étant de 80 °C à 200 °C.

8. Câble composite photoélectrique selon l'une quelconque des revendications 1 à 7, un coefficient de frottement de la gaine extérieure (10) étant inférieur ou égal à 0,5, et la dureté de la gaine extérieure (10) étant supérieure ou égale à 70 Shore A.

9. Câble composite photoélectrique selon l'une quelconque des revendications 1 à 8, chaque unité optique (20, 201, 202, 203, 204, 205) et chaque unité électrique (30, 301, 302, 303, 304, 305) étant en contact rapproché avec une paroi intérieure de la gaine extérieure (10).

10. Système de communication, comportant un premier dispositif (1301) de communication et un second dispositif (1302) de communication, le premier dispositif (1301) de communication et le second dispositif (1302) de communication étant connectés par l'intermédiaire d'un câble composite photoélectrique (1303), et le câble composite photoélectrique (1303) étant le câble composite photoélectrique (1303) selon l'une quelconque des revendications 1 à 9 ;
le premier dispositif (1301) de communication étant configuré pour délivrer un signal optique et un signal électrique ; et
le second dispositif (1302) de communication étant configuré pour recevoir le signal optique et le signal électrique.
